Europäisches Patentamt

European Patent Office

Office européen des brevets

(11) Veröffentlichungsnummer: **0 093 986**
B1

# EUROPÄISCHE PATENTSCHRIFT

(45) Veröffentlichungstag der Patentschrift:
**29.01.86**

(21) Anmeldenummer: **83104245.2**

(22) Anmeldetag: **30.04.83**

(51) Int. Cl.⁴: **A 01 C 7/00,** A 01 C 15/00

(54) **Mobiles landwirtschaftliches Gerät.**

(30) Priorität: **06.05.82 DE 3217010**

(43) Veröffentlichungstag der Anmeldung:
**16.11.83 Patentblatt 83/46**

(45) Bekanntmachung des Hinweises auf die Patenterteilung:
**29.01.86 Patentblatt 86/5**

(84) Benannte Vertragsstaaten:
**AT DE FR GB**

(56) Entgegenhaltungen:
**DE - A - 2 062 835**
**DE - A - 2 225 420**
**DE - A - 2 744 939**
**DE - A - 2 813 670**
**DE - A - 3 137 484**

(73) Patentinhaber: **Kirchberger, Franz, Lichtenfelser Strasse 43, D-8623 Staffelstein (DE)**

(72) Erfinder: **Kirchberger, Franz, Lichtenfelser Strasse 43, D-8623 Staffelstein (DE)**

(74) Vertreter: **Fuchs, Richard, Kantstrasse 18, D-8700 Würzburg (DE)**

## Beschreibung

Die Erfindung betrifft ein mobiles landwirtschaftliches Gerät gemäss dem Oberbegriff des Anspruches 1.

Die Ausbringung von Kultiviergütern auf landwirtschaftliche Nutzflächen soll vorgegeben Gesamtmengen-Sollwerte, beispielsweise in Kilogramm pro Hektar Nutzfläche, befolgen und innerhalb definierter Grenzen über die gesamte Nutzfläche gleichmässig und homogen verteilt sein. Die herkömmlichen Dosierverfahren arbeiten auf mechanischem Wege mit Getrieben für die rotierenden Dosierräder, mit im Querschnitt verstellbaren Auslaufschächten bzw. Düsenformen, oder auf hydromechanischem Wege. Dabei werden in Abhängigkeit von der Fahrgeschwindigkeit über die Dosierräder bei festen Kultiviergütern bzw. bei bestimmten Querschnittseinstellungen oder Druckbeaufschlagungen bei Flüssigkeiten die vorab mit Hilfe von Tabellen oder aufgrund von aus Abdrehproben ermittelten Erfahrungswerte eingestellt. Diese vorgewählten Einstellungen führen jedoch häufig zu falschen Ergebnissen, weil durch nicht vorhersehbare oder nicht erfassbare Einflussfaktoren der Sollwert der Ausbringungsmenge des Kultiviergutes beeinflusst wird. Hierzu gehören z. B. der Schlupf der Laufräder auf dem Boden, Erschütterungen, die während der Fahrt auf den Dosiermechanismus einwirken, wechselnde Gleitfähigkeit gekörnten Kultiviergutes, das während der Aussaat unterschiedlich gebeizt wird und deshalb mehr oder weniger aneinander haftet und im Vorratsbehälter Brücken bildet, Veränderungen der zu bearbeitenden Nutzfläche hinsichtlich ihrer physikalischen Eigenschaften und ihrer Formationen, unterschiedlich hoher Pegelstand des Kultiviergutes im Vorratsbehälter u. a. Durch alle diese Einflussfaktoren ist der Ausbringungsvorgang äusserst komplex und das Dosierergebnis quasi als ein Zufallsmechanismus zu betrachten. Die Korrektur dieses Zufallsmechanismus erfolgt bekanntermassen nur sporadisch nach dem Augenschein und mit Schätzwerten. Es ist auch bekannt, das Volumen des Vorratsbehälterinhaltes entweder durch Schwimmer, welche auf der Oberfläche des körnigen Kultiviergutes aufliegen sollen, optisch durch Schaugläser, oder optoelektrisch durch Lichtschranken zu messen. Schwimmer graben sich bei Erschütterungen leicht in das körnige Kultiviergut ein und optoelektrische Lichtschranken, die das Absinken der Vorratsmenge im unteren Behälterbereich anzeigen sollen, versagen im Vorratsbehälter, weil bei pulverigem und körnigem Kultiviergut dort immer eine starke Staubentwicklung herrscht, so dass die im Vorratsbehälter das Absinken der Kultiviergutoberfläche kontrollierenden Lichtschranken nur ungenügend arbeiten. Eine quantitative Erfassung ist bei allen diesen Systemen nicht möglich.

Durch die DE-A Nr. 2225420 ist eine Saatgutkontrollvorrichtung an Sämaschinen bekannt geworden, von welcher der Anspruch 1 ausgeht. Bei dieser Vorrichtung ist als Kontrollmechanismus zwischen einem Arbeitsdosiermechanismus bzw.

Dosierrad und einem einen Messbeutel tragenden Auslass ein um eine vertikale Achse rotierender Kontrollausgeber mit zahlreichen, durch Teilwände voneinander getrennten Taschen vorgesehen. Der Antrieb dieses Kontrollausgebers erfolgt permanent von dem Verfahrrad der Sämaschine über ein Zahnradgetriebe. Dadurch ist diese Konstruktion baulich jedoch verhältnismässig aufwendig, und sie ist vor allem nicht abschaltbar. Dies bedeutet, dass der erforderliche gleichmässige Saatfluss in die betreffende Drillschar während der Zeitspanne durch den Kontrollausgeber gestört wird, in der überhaupt keine Messung erfolgen soll. Vielmehr bewirkt bei dieser bekannten Vorrichtung der Kontrollausgeber ausserhalb der Messperiode eine portionsweise Abgabe des Saatgutes in die Drillschar. Die Folge ist eine Störung in der Längsverteilung des Saatgutes in der betreffenden Saatreihe, die von Anfang bis zum Ende ertragsschwach ist.

Es ist bereits eine Messvorrichtung an landwirtschaftlichen Geräten zum ständigen Erfassen des Inhaltes eines mitgeführten Vorratsbehälters für auf landwirtschaftliche Nutzflächen auszubringendes Kultiviergut beschrieben, bei der der Vorratsbehälter an einem Traggestell der Maschine, das durch Beschleunigungen oder Schräglagen entstehende horizontale Kraftkomponenten eliminiert, frei aufgehängt und senkrecht in festgelegten Grenzen annähernd reibungslos und elastisch nachgiebig geführt ist. Dort ist der Vorratsbehälter an einem allseitig beweglichen Halteglied abgestützt bzw. aufgehängt, das mit einem Messfühler derart in Verbindung steht, dass im wesentlichen nur senkrecht wirkende Kräfte auf den Messfühler einwirken.

Ferner ist eine entsprechende Vorrichtung beschrieben, bei der Druckaufnehmer einer Wiegeeinrichtung am Vorratsbehälter, eine Drehzahlmessvorrichtung an den Laufrädern und eine Eingabestation für den Sollwert der auszubringenden Menge des Kultiviergutes mit ihren elektrischen Spannungen an der Eingangsseite eines Mikroprozessors anliegen, der mit seinem Ausgangssignal über ein Streuventil einen Motor steuert, der den Dosierantrieb für das auszubringende Kultiviergut regelt.

Mit den beiden zuletzt genannten Messvorrichtungen ist eine vollautomatische, permanente Kontrolle der Dosierung und eine automatische Rückkoppelung des Ergebnisses in die Dosiersteuerung gegeben.

Eine weitere durch die DE-OS Nr. 2062835 bekannte Kontrolleinrichtung ist nur für die sog. Abdrehprobe geeignet und soll letztere erleichtern.

Beim Kontrollmechanismus nach der DE-OS Nr. 2813670 ist es zur Durchführung einer Messung jedesmal erforderlich, ein Messrohr von Hand mit Kultiviergut zu füllen.

Der Erfindung liegt die Aufgabe zugrunde, ein mobiles landwirtschaftliches Gerät der eingangs genannten Art zur Verfügung zu stellen, das bei deutlich niedrigerem technischen Aufwand und ohne den Zwang zur ständigen zusätzlichen Überwachung die Feststellung der Ausbringungsmen-

ge halbautomatisch und in kleinen, leicht wiegbaren oder zählbaren Mengenintervallen mit einer Umrechnung auf die bis dahin bearbeitete Anbaufläche erlaubt, wobei diese Intervallergebnisse einfach in korrigierte Einstellwerte umrechenbar sind.

Diese Aufgabe wird erfindungsgemäss durch die Merkmale des kennzeichnenden Teiles des Anspruches 1 gelöst. Bevorzugte Weiterbildungen der Erfindung sind in den Unteransprüchen gekennzeichnet.

Die mit der Erfindung erzielten Vorteile bestehen insbesondere darin, dass die Dosiermenge arbeitsbegleitend und quantitativ gemessen wird, dass die Messung nicht an einer experimentellen Abdrehprobe unter unrealistischen Bedingungen ohne Fahrterschütterungen, ohne Schlupf im Antrieb, u. dgl., sondern an der tatsächlichen Dosierarbeit orientiert wird, dass die Dosierung bei kleinen, leicht zu handhabenden Kontrollmengen über kontrollierbare Weg- und Zeitintervalle mit hinreichender Genauigkeit arbeitet, dass die Dosierarbeit permanent und in beliebigen Arbeitsabschnitten gemessen wird, dass Gewichtsmessungen einfach in Volumenmessungen umgesetzt werden können, dass der technische Aufwand äusserst gering ist, dass die Verwendung von im Vorratsbehälter versagenden Lichtschranken möglich ist. Bei pulverigen und gekörnten Kultiviergütern herrscht im Vorratsbehälter immer eine starke Staubentwicklung, so dass die Beobachtung des Absinkens der Kultiviergutoberfläche auf den Behälterboden, der immer verunreinigt ist, nicht möglich ist. Im Unterschied hierzu löst im erfindungsgemässen Messbecher das Ansteigen der Kultiviergutoberfläche ein Signal aus, wobei der oberen Rand des Messbechers im Bereich der Lichtschranke leicht sauber gehalten werden kann. Weitere Vorteile bestehen darin, dass permanent die Ausbringung des Kultiviergutes kontrolliert werden kann, dass die Vorrichtung unempfindlich gegen Hanglagen ist, dass sie nicht vom Anwender kontrolliert werden muss und sich vor dem Überlaufen des Messbechers automatisch abschaltet, dass die Säarbeit nicht unterbrochen zu werden braucht, weil der Anwender während der Fahrt auf dem Traktor die Messergebnisse ablesen und die Entleerung des Messbechers vornehmen kann. Vor Beginn der Arbeit kann der Messbecher durch Wiegen oder Auszählen des Inhalts für das jeweilige Saatgut geeicht werden.

Ein Ausführungsbeispiel der Erfindung ist in der Zeichnung dargestellt. Es zeigen:

Fig. 1 eine Seitenansicht eines mobilen, landwirtschaftlichen Gerätes;

Fig. 2 eine Vorderansicht eines Teiles eines mobilen, landwirtschaftlichen Gerätes, und

Fig. 3 die entsprechenden Blockschaltungen eines mobilen, landwirtschaftlichen Gerätes.

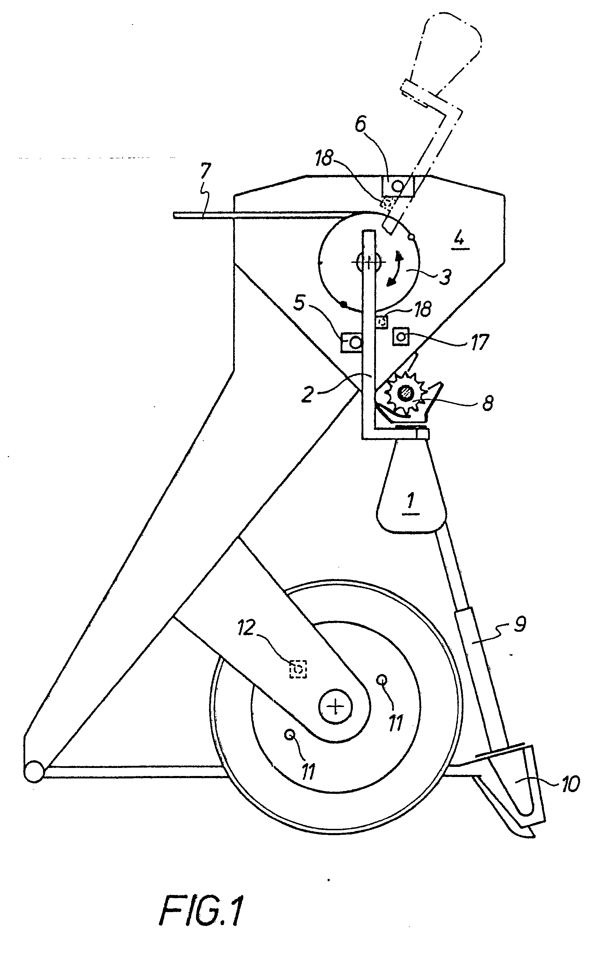

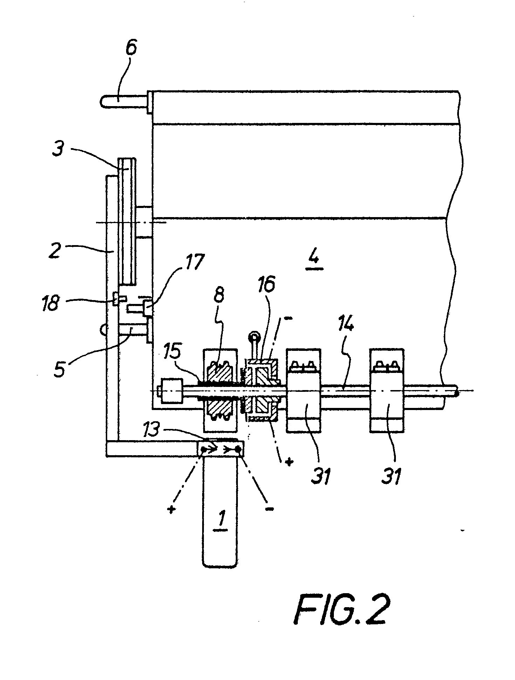

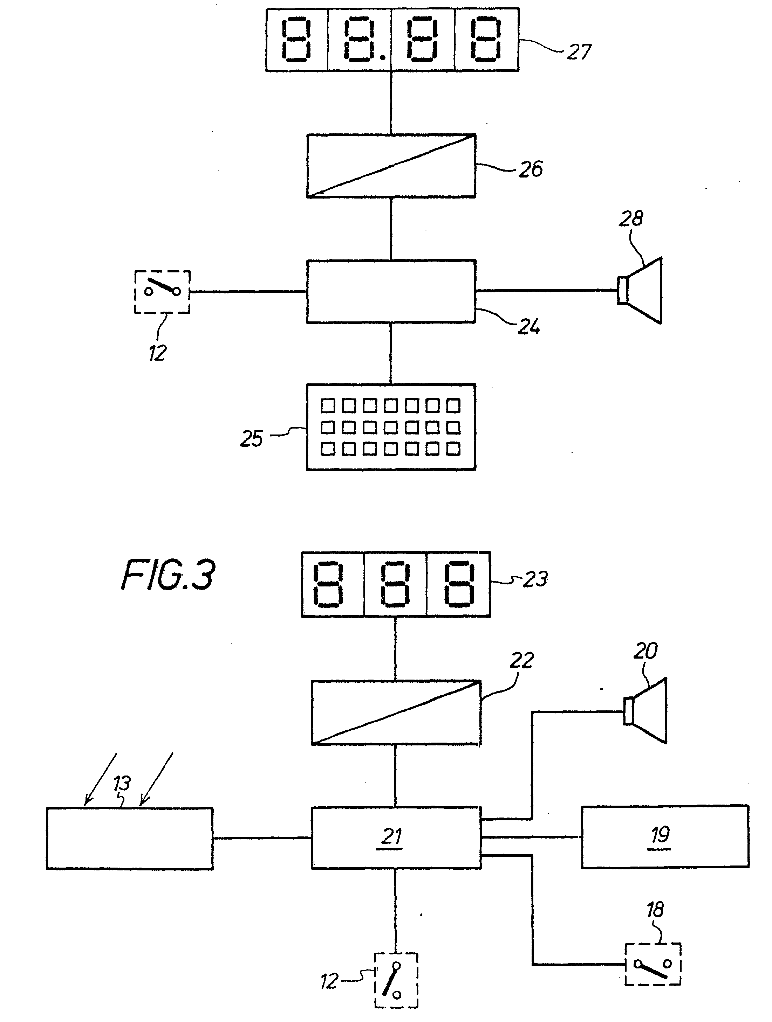

Die Fig. 1 und 2 zeigen neben den im Ausführungsbeispiel gewählten üblichen Arbeitsdosierrädern 31 ein Kontrolldosierrad 8, mittels welchem ein Messbecher 1 bis zu einer durch Pfeile angedeuteten Lichtschranke 13, die als Wirkungsgrenze funktioniert, während der Arbeit im Feld gefüllt wird. Wenn die Füllgutoberfläche den Lichtweg der Lichtschranke 13 erreicht und den Lichtstrahl unterbricht, wird ein in Fig. 3 dargestellter Steuerregisterzähler 21 durch die dort dargestellte Lichtschranke 13 gestoppt, der die während des Zeitintervalles, das zur Füllung des Messbechers 1 notwendig ist, zurückgelegte Wegstrecke anhand der Impulse aus dem Reedschalter 12 in Verbindung mit den Magneten 11 am Laufrad zählt. Mit der Unterbrechung der Lichtschranke 13 wird gleichzeitig der in Fig. 3 durch den Block 19 angedeutete Haltestrom für die Kupplung 16 (Fig. 2) unterbrochen, wodurch die Hohlwelle 15 mit dem Kontrolldosierrad 8 stehen bleibt. Nur die Dosierradwelle 14 mit den parallel laufenden Arbeitsdosierrädern 31 dreht sich weiter, so dass den Scharen 10 durch die Saatrohre 9 Kultiviergut zufliesst. Über den Decoder und den Treiber 22 zeigt das Display 23 die im Zeitintervall der Füllung des Messbechers 1 gesäte Fläche an. Erreicht der Zähler 21 (Fig. 3) eine über die Tastatur 25 eingegebene Flächengrenzzahl, so wird der Signalgeber 20 ausgelöst, der dem Anwender ein Warnsignal gibt. Der Anwender kann dann diese Kontrollmenge an Kultiviergut im Messbecher 1 auf die Arbeitsmenge, die im gleichen Zeit- und Wegintervall auf die landwirtschaftliche Nutzfläche ausgebracht worden ist, und diese letztere Menge auf die im Display 23 angezeigte Fläche umrechnen. Diese Hochrechnung ist zulässig, weil der Kontrolldosierauslauf zur gesamten Dosierleistung in einem bekannten Verhältnis steht, das bei Kontroll-Dosierwerkzeugen, die parallel zu einer bestimmten Anzahl gleichartiger Arbeitswerkzeuge geschaltet sind, entsprechend dieser Anzahl festliegt, und bei Kontrollausgängen, die sich im Querschnitt vom Arbeitsausgang unterscheiden, in einer Abdrehprobe vor der Arbeit ermittelt werden kann. Der Quotient aus Arbeitsmenge zu Fläche kann mit dem Sollwert verglichen und eine etwaige Differenz in einer entsprechenden Korrektur der Dosiereinstellung ausgeglichen werden. Die einzelnen Umrechnungen können dabei mit entsprechenden Rechenschiebern durchgeführt werden. Dies gilt auch für die Einstellungskorrekturen, wenn die Skala des Einstellungsmechanismus auf eine logarithmische Wirkungskurve abgebildet wird.

Bezogen auf den Gesamtinhalt des Vorratsbehälters 4 für das Kultiviergut kann nach der ersten Kontrollmessung auch die Gesamtfläche, die bei der jeweiligen Dosiereinstellung bearbeitet werden kann, errechnet und eine Markierung in einem zweiten, durchgehend laufenden Flächenzähler 24 gesetzt werden. Wenn sein Zählerstand bei dieser Markierung, bzw. bei einem gewählten Abstand davor ankommt, erteilt das Register 24 den Auslösebefehl für das Warnsignal des Signalgebers 28. Es informiert den Anwender über das bevorstehende Leerlaufen des Vorratsbehälters 4 des mobilen landwirtschaftlichen Gerätes.

Auf einer Kurvenbahn wird der vollgefüllte Messbecher 1 fernbetätigt mit dem Bowdenzug 7 vom Traktorfahrerstand aus von der Messposition in die Entleerungsposition geschwenkt. Bei dieser Drehung um die Schwenkscheibe 3 passiert die Halterung 2 mit dem Reedschalter 18 den Magneten 17 und schlägt am oberen Anschlag 6 an. Nach dem Entleeren und dem Zurückschwenken in die durch den unteren Anschlag 5 gegebene Messposition passiert die Halterung 2 mit dem Reedschalter 18 den Magneten 17 ein zweites Mal. Bei dieser zweiten Passage wird die Ausgabe des Zählers 21 (Fig. 3) wieder auf Null gestellt und sein Zählwerk sowie der Treiber 22 und die Kupplung 16 mittels des Haltestromes aus Block 19 wieder in Betrieb gesetzt, derart, dass sich das Kontrolldosierrad 8 mit den Arbeitsdosierrädern 31 wieder mitdreht. Gleichzeitig verarbeitet der Zähler 24 die Impulse des Reedschalters 12 durchgehend weiter und zeigt über den Decoder 26 auf dem Display 27 die zurückgelegte Gesamtfläche an. Wie bereits erwähnt worden ist, kann nach der ersten Füllung des Messbechers 1 mit Rechenscheiben oder -schiebern die Flächengrenze hochgerechnet werden, welche mit einer Füllung des Vorratsbehälters 4 erreicht werden kann. Diese Flächengrenze wird über die Tastatur 25 in das Steuerregister 24 eingegeben, das bei Erreichen der markierten Flächengrenze für das Warnsignal 28 den Auslösenbefehl erteilt.

Besonders vorteilhaft arbeitet das erfindungsgemässe, mobile landwirtschaftliche Gerät beim Ausbringen von Saatgut. Hier ist die Zielgrösse nicht eine bestimmte Gewichtsmenge pro Flächeneinheit, sondern zur Erzielung einer optimalen Pflanzendichte eine bestimmte Körnerzahl pro Flächeneinheit. Bekanntermassen wird auch Saatgut nur deswegen in Gewichtseinheiten dosiert, weil die Auszählung der Körner in der vollständigen Arbeitsmenge auch in der verkürzten Zeit für eine Abdrehprobe zu arbeitsaufwendig wäre. Diese Gewichtsdosierung ist bei Saatgut wie Getreide, Grassamen, Raps u. a. körnigen Kultiviergut nicht kalibrierbar und deshalb ungenau. Körnergrösse und spezifisches Gewicht schwanken nach Saatsorten und Erntejahr. Selbst in jeder einzelnen Probe gibt es eine Streuung unterschiedlich grosser und schwerer Körner. Das erfindungsgemässe Gerät mit reduzierter Kontrollmenge parallel zur Arbeitsmenge erlaubt eine rationelle Erfassung der Körnerzahl in einer kleinen repräsentativen Volumeneinheit, in der sie vor Beginn der Arbeit ausgezählt wird. Das kann — um unwirtschaftlichen Aufwand zu vermeiden — mit einfachen Hilfsmitteln, wie Zählrinnen mit profilierter Furche, geschehen, wo die Körner der auszuzählenden Volumeneinheit nur aufgereiht werden müssen, damit ihre Gesamtzahl schnell überblickt werden kann. Während der Arbeit genügt dann die Feststellung der ausgezählten Volumeneinheit, um jeweils auf die letztlich interessierende Körnerzahl umzurechnen.

Wenn der Querschnitt des Messbechers im kritischen Messbereich nahe seiner Oberkante entsprechend klein dimensioniert ist, bewegt sich der Oberflächenpegel der Kontrollmenge hinreichend genau. Beispielsweise steigt der Oberflächenpegel bei einer Drillmaschine mit 2,50 m Arbeitsbreite und 21 Säreihen mit 210 kg Weizen des spezifischen Gewichtes 0,75 g/cm³ pro Hektar und einem Ausgangsquerschnitt des Messbechers von 6,66 cm² um 0,5 cm pro Meter Fahrtstrecke im Feld. Eine Messstrecke von 100 m erzeugt dann am Kontrolldosierrad 250 g Kontrollgut bzw. auf die aussagestärkere Körnerzahlmethode umgesetzt 400 Körner pro m² oder 48 Körner pro Meter Fahrtstrecke.

Es ist auch möglich, die bisherige Abdrehprobe und die erfindungsgemässe, arbeitsbegleitende Vorrichtung eines zu den Arbeitsdosierrädern parallelen Kontrolldosierrades mit Messbehälter zu kombinieren. Die bekannte Abdrehprobe gibt einen Querschnitt über die gesamte Leistungsbreite in einem bestimmten Zeit- oder Arbeitsintervall; der parallele Messbehälter einen Querschnitt über die gesamte Arbeitszeit auf einem exemplarischen Ausflussabschnitt. Wird nun vor Arbeitsbeginn die Abdrehprobe und anschliessend die arbeitsbegleitende Messbehälterkontrolle durchgeführt, werden sowohl Unregelmässigkeiten über die Arbeitsbreite wie über die Länge der Einsatzzeit erfasst.

Die Erfindung kann mit gleichem Erfolg auch mit anderen Dosiereinrichtungen anstelle der im Ausführungsbeispiel gewählten Dosierräder angewendet werden, z. B. mit schieberverstellbaren Auslaufschächten, Dosierschaufeln, Dosierdüsen, Dosierbändern, Dosierschnecken u. ä. Wesentlich bei allem Anwendungsfällen ist lediglich, dass die Kontrolldosiereinrichtung gegenüber den üblichen Arbeitsdosiermechanismen so viele Parallelen aufweist, dass objektiv realistische und proportionale oder lineare Vergleichswerte gewonnen werden können.

**Patentansprüche**

1. Mobiles landwirtschaftliches Gerät zur Verteilung eines insbesondere körnigen Kultiviergutes auf eine landwirtschaftliche Nutzfläche, bei dem das Kultiviergut aus einem Vorratsbehälter (4) über Arbeitsdosiermechanismen (31) ausgebracht wird und ein Kontrollmechanismus (8) mit einem Messbecher (1) zum arbeitsbegleitenden Sammeln einer bestimmten Menge des dosierten Kultiviergutes vorgesehen ist, dadurch gekennzeichnet, dass der Kontrollmechanismus aus einem parallel zu den üblichen Arbeitsdosiermechanismen (31) angeordneten und mit ihnen funktionsidentischen und gleichlaufenden, abschaltbaren Kontrolldosiermechanismus (8) besteht, der in Intervallen den Messbecher (1) mit dem Kultiviergut speist.

2. Gerät nach Anspruch 1, dadurch gekennzeichnet, dass im Messbecher (1) eine Signaleinrichtung (13) angeordnet ist, die beim Erreichen einer bestimmten Obergrenze durch den Oberflächenpegel der im Messbecher (1) gesammelten Kultiviergutmenge ein Signal auslöst, das den Kontrolldosiermechanismus (8) und einen Kontrollflächenzähler (21) stoppt und gleichzeitig eine Warnsignalvorrichtung (20) auslöst.

3. Gerät nach Anspruch 1 oder 2, dadurch gekennzeichnet, dass mittels einer Steuerschaltung (22) mit der Entleerung des Messbechers (1) der Kontrolldosiermechanismus (8) und der Kontrollflächenzähler (21) gestartet werden.

4. Gerät nach einem der Ansprüche 1-3, dadurch gekennzeichnet, dass durch eine Schaltung die errechnete Flächenkapazität entsprechend der Kultiviergutmenge im Vorratsbehälter (4) in einem durchlaufenden Flächenzähler (24) markierbar ist und, wenn sie vom Zählerstand erreicht wird, mittels einer Warnsignalvorrichtung (28) angezeigt wird.

5. Gerät nach einem der Ansprüche 1-4, dadurch gekennzeichnet, dass die Abmessungen des Messbechers (1) unterschiedlich voluminösen Kultiviergütern anpassbar sind.

6. Gerät nach einem der Ansprüche 1-5, dadurch gekennzeichnet, dass für verschiedene Kultiviergüter auswechselbare Messbecher (1) vorgesehen sind.

7. Gerät nach einem der Ansprüche 1-6, dadurch gekennzeichnet, dass der Messbecher (1) mittels einer Fernbedienung (7) von der Arbeitsposition zur Entleerungsposition führbar ist.

## Revendications

1. Appareil agricole mobile pour distribuer un produit de culture, en particulier granulaire, sur une surface agricole exploitée, dans lequel le produit de culture est déversé à partir d'un récipient de réserve (4) par l'intermédiaire de mécanismes doseurs (31), et dans lequel il est prévu un mécanisme de contrôle (8) muni d'un récipient mesureur (1) pour rassembler, pendant le travail, une quantité déterminée du produit de culture dosé, appareil caractérisé par le fait que le mécanisme de contrôle consiste en un mécanisme doseur de contrôle (8) qui peut être mis hors fonction, est disposé parallèlement aux mécanismes doseurs classiques (31), remplit des fonctions identiques à celles de ces mécanismes, fonctionne en synchronisme avec ces derniers et alimente par intervalles le récipient mesureur (1) en produit cultivé.

2. Appareil selon la revendication 1, caractérisé par le fait que le récipient mesureur (1) renferme un dispositif de signalisation (13) qui, lorsque le niveau de la surface de la quantité de produit cultivé rassemblée dans le récipient mesureur (1) atteint une limite supérieure déterminée, déclenche un signal qui met à l'arrêt le mécanisme doseur de contrôle (8) et un compteur (21) de contrôle de surface, et qui déclenche simultanément un dispositif (20) délivrant des signaux d'alarme.

3. Appareil selon l'une des revendications 1 ou 2, caractérisé par le fait que, concomitamment au vidage du récipient mesureur (1), le mécanisme doseur de contrôle (8) et le compteur (21) de contrôle de surface sont mis en fonction au moyen d'un circuit de commande (22).

4. Appareil selon l'une des revendications 1 à 3, caractérisé par le fait que, par l'intermédiaire d'un circuit, la capacité calculée en surface peut être repérée dans un compteur (24) de surface travaillant en continu, en fonction de la quantité de produit de culture renfermée par le récipient de réserve (4) ; et par le fait que, lorsque cette capacité est atteinte par la totalisation du compteur, elle est indiquée au moyen d'un dispositif (28) délivrant des signaux d'alarme.

5. Appareil selon l'une des revendications 1 à 4, caractérisé par le fait que les dimensions du récipient mesureur (1) peuvent être adaptées à des produits de culture de volume différents.

6. Appareil selon l'une des revendications 1 à 5, caractérisé par le fait que des récipients mesureurs interchangeables (1) sont prévus pour des produits de culture différents.

7. Appareil selon l'une des revendications 1 à 6, caractérisé par le fait que le récipient mesureur (1) peut être amené, au moyen d'une télécommande (7), de la position de travail à la position de vidage.

## Claims

1. A mobile agricultural implement for distributing especially a granular agricultural product over an area of farm land, the agricultural product being distributed from a hopper (4) via operative metering mechanisms (31), and there being provided a control mechanism (8) with a measuring cup (1) for collecting during operation a specific amount of the metered agricultural product, characterized in that the control mechanism comprises a control metering mechanism (8) which is arranged parallel to the usual operative metering mechanisms (31), functions in an identical manner thereto and is synchronized therewith, and may be switched off, the control metering mechanism (8) feeding the measuring cup (1) at intervals with the agricultural product.

2. An implement according to Claim 1, characterized in that a signalling device (13) is arranged in the measuring cup (1), which signalling device releases a signal when a certain upper limit is reached by the surface level of the batch of agricultural product in the measuring cup (1), which signal stops the control metering mechanism (8) and a control area-counter (21) and at the same time releases a warning signal device (20).

3. An implement according to Claim 1 or Claim 2, characterized in that by means of a control circuit (22) the control metering mechanism (8) and the control area-counter (21) are started when the measuring cup (1) is emptied.

4. An implement according to any one of Claims 1-3, characterized in that the calculated area capacity corresponding to the amount of agricultural product in the hopper (4) can be marked by a circuit in a continuous area-counter (24) and, when it is reached by the counter reading, is indicated by means of a warning signal device (28).

5. An implement according to any one of Claims 1-4, characterized in that the measurements of the measuring cup (1) are adaptable to agricultural products of different sizes.

6. An implement according to any one of Claims

1-5, characterized in that interchangeable measuring cups (1) are provided for different agricultural products.

7. An implement according to any one of Claims 1-6, characterized in that the measuring cup (1) can be moved from the operating position to the emptying position by means of remote control equipment (7).

6

FIG.1

FIG.2

FIG.3